# EUROPÄISCHE PATENTSCHRIFT

(11) **EP 4 624 776 B1**
(45) Veröffentlichungstag und Bekanntmachung des Hinweises auf die Patenterteilung: **02.12.2026**
(21) Anmeldenummer: 25165442.2
(22) Anmeldetag: 21.03.2025
(51) Int. Cl.: F16D 48/06

(54) **ELEKTRONISCHE EINRICHTUNG ZUR ANSTEUERUNG EINES ENTKUPPLUNGSAKTUATORS**
ELECTRONIC DEVICE FOR CONTROLLING A DECOUPLING ACTUATOR
DISPOSITIF ÉLECTRONIQUE DE COMMANDE D'UN ACTIONNEUR DE DÉCOUPLAGE

(30) Priorität: 25.03.2024 DE 102024108440
(43) Veröffentlichungstag der Anmeldung: 01.10.2025
(73) Patentinhaber: KB INTELLECTUAL PROPERTY GMBH & CO. KG, 80809 München (DE)
(72) Erfinder: LIU, Cheng, 81829 München (DE); JASS, Steffen, 16515 Oranienburg (DE); CABESTANY PONS, Josep, 80802 München (DE); LEDERER, Philipp, 83098 Brannenburg (DE); VYSHNEVETSKYI, Kostiantyn, 80807 München (DE)

(56) Entgegenhaltungen:
- EP-A1- 4 339 057
- DE-A1- 102016 221 477
- US-A- 5 503 280
- US-A1- 2023 391 380

## Beschreibung

Die Erfindung betrifft eine elektronische Einrichtung zur Ansteuerung eines elektromotorisch angetriebenen Entkupplungsaktuators einer automatischen Kupplung eines Schienenfahrzeugs mittels einer mit mehreren elektronischen Schaltmitteln bestückten H-Brückenschaltung zur Erzeugung einer Vor- und Rückstellbewegung des Entkupplungsaktuators. Außerdem betrifft die Erfindung auch einen mit einer solchen elektronischen Einrichtung ausgestatteten Entkupplungsaktuator als Baueinheit sowie eine automatische Mittelpufferkupplung, insbesondere für Güterzüge, die nach Art einer Scharfenbergkupplung ausgebildet ist und einen solchen Entkupplungsaktuator mit umfasst.

### Technisches Gebiet

Das Einsatzgebiet der Erfindung erstreckt sich vornehmlich auf den Schienenfahrzeugbau, insbesondere auf eine Anwendung bei Güterzügen. Um die Digitalisierung und Automatisierung im Schienenverkehr voranzutreiben, spielt die sogenannte Digitale Automatische Kupplung (DAK) eine zunehmende Bedeutung. Insbesondere im Bereich des Güterverkehrs besteht der Bedarf, noch übliche manuell zu betätigende Kupplungen zwischen Güterwaggons gegen die hier interessierenden automatischen Kupplungen zu ersetzen. Durch zunehmende Prozessautomatisierung unter Verwendung der DAK lassen sich Güterzüge flexibler und zeiteffizienter zusammenstellen. Zudem ermöglichen zugweite digitale Schnittstellen neue Funktionalitäten im Hinblick auf eine verbesserte Diagnose, Wartung und Instandsetzung.

### LK:

Sowohl im Personen- wie auch im Güterverkehr sind automatische Kupplungen der Bauart Scharfenberg, sogenannte Scharfenbergkupplungen, gebräuchlich. Bei einer Scharfenbergkupplung läuft der Kupplungsvorgang mechanisch automatisch über eine integrierte Hakenscheibe und Federpakete im Kupplungskopf ab.

Für den im Rahmen der vorliegenden Erfindung interessierenden Entkupplungsvorgang ist bei einer DAK ein zusätzlicher Entkupplungsaktuator erforderlich, welcher beispielsweise eine Hakenscheibe einer Scharfenbergkupplung entgegen der Federkraft in die Lösestellung zurückdrückt.

### Stand der Technik

Gemäß dem allgemein bekannten Stand der Technik werden für Züge des Personenverkehrs zum Entkuppeln elektropneumatische Aktuatoren verwendet, welche von dem standardgemäß vorhandenen Druckluftsystem des Zuges versorgt werden. Für Güterzüge werden hingegen elektromechanische Lösungen präferiert, welche mit elektrischer Energie betrieben werden. Dies wiederum bedingt eine geeignete Ansteuerungs- und Diagnoseelektronik, um den elektromotorischen Teil des elektrischen Antriebs anzusteuern und dessen Zustände zu überwachen.

Speziell für die Entkupplung einer DAK müssen jedoch vom übergeordneten Steuersystem valide Anforderungen vorliegen, um ein unbeabsichtigtes Entkuppeln, insbesondere während der Fahrt, zuverlässig zu vermeiden. Stand der Technik sind EP 4339 057, US 2023/ 391380 , US 5 503 280 und DE 10 2016 221477.

Es ist die Aufgabe der vorliegenden Erfindung, eine elektronische Einrichtung zur Ansteuerung eines für den Güterverkehr geeigneten elektromotorisch angetriebenen Entkupplungsaktuators für eine DAK zu schaffen, welche mit geringem technischen Aufwand eine fehlfunktionssichere Entkupplung gewährleistet.

### Kurzbeschreibung der Erfindung

Die Aufgabe wird ausgehend von einer elektronischen Einrichtung gemäß dem Oberbegriff von Anspruch 1 in Verbindung mit dessen kennzeichnenden Merkmalen gelöst. Der nebengeordnete Anspruch 7 gibt einen eine erfindungsgemäße elektronische Einrichtung umfassenden Entkupplungsaktuator an. Der nebengeordnete Anspruch 10 ist auf eine automatische Mittelpufferkupplung, insbesondere für Güterzüge, mit einem solchen Entkupplungsaktuator gerichtet. Die jeweils rückbezogenen abhängigen Ansprüche beziehen sich auf vorteilhafte Weiterbildungen der Erfindung.

Die Erfindung schließt die technische Lehre ein, dass eine H-Brückenschaltung von vorzugsweise vier elektronischen Schaltmitteln zur Gewährleistung einer unbeabsichtigten Entkupplung an zwei getrennte Versorgungsspannungen mit je zugeordneten Masseanschlüssen angeschlossen ist, wobei die erste Versorgungsspannung zur Ausführung einer Rückstellbewegung des Entkupplungsaktuators permanent anliegt, wohingegen eine übergeordnete Steuereinheit die zweite Versorgungsspannung zur Ausführung einer Vorstellbewegung zwecks Entkupplung nur dann aufschaltet, wenn eine steuerungstechnische Entkupplungsanforderung für den Entkupplungsaktuator vorliegt.

Mit anderen Worten wird zur Vermeidung einer unbeabsichtigten Entkupplung durch den Entkupplungsaktuator eine H-Brückenschaltung mit zwei getrennten Versorgungsspannungen samt jeweiligen Massen eingesetzt. Die erfindungsgemäße Lösung beruht auf der Erkenntnis, dass ein Entkupplungsvorgang durch einen Entkupplungsaktuator aufgrund des Anschlusses an eine andere Spannungsquelle verhindert werden kann, wenn diese hardwaretechnisch nicht zur Verfügung gestellt wird. Währenddessen ist allerdings das Zurückfahren des Entkupplungsaktuators und folglich die Gewährleistung der Hauptfunktionalität der DAK weiterhin sichergestellt, so dass ein sicherer Systemzustand ermöglicht wird. Die zweite Versorgungsspannung zur Auslösung der Entkupplung, welche in kinematischer Umkehr natürlich auch in einer Rückstellbewegung ausgeführt werden könnte, wird erfindungsgemäß von der übergeordneten Steuereinheit nur für eine kurze Zeit bereitgestellt, nämlich im sogenannten "Shunting Mode", also wenn eine valide Entkupplungsanforderung für die DAK in Form eines elektrischen Signals vorliegt. Anderenfalls ist die zweite Versorgungsspannung über durch die übergeordnete Steuereinheit betätigbare elektrische Schaltmittel, also hardwaremäßig, ausgestellt.

Gemäß einer bevorzugten Ausführungsform ist die Steuereinheit als eine zentrale Wagensteuerung ausgebildet. Dies bedeutet, dass die den Entkupplungsaktuator ansteuernde übergeordnete Steuereinheit im Bereich eines Wagens des Güterzuges angeordnet ist und an dieser Stelle mindestens eine DAK hinsichtlich der Entkupplung ansteuert. Insbesondere im Zusammenhang hiermit wird vorgeschlagen, die H-Brückenschaltung im Rahmen der elektronischen Einrichtung als eine lokale Aktuatorsteuerung auszubilden, welche insoweit innerhalb eines Aktuatorgehäuses in Form einer bauteilebestückten Leiterplatte untergebracht ist. Dies gewährleistet den weiteren Vorteil, dass sonstige zugeordnete elektrische Bauelemente, wie insbesondere Positionssensoren und dergleichen, ortsnah über eine kurze Zuleitung geschützt anschließbar sind.

Vorzugsweise sind die elektronischen Schaltmittel als MOSFET's ausgeführt. Im Rahmen der H-Brückenschaltung kommen gemäß einer bevorzugten Ausführungsform insgesamt vier MOSFET's zur Anwendung, welche sich in zwei sogenannte High-Side(HS)-Schaltmittel und zwei sogenannte Low-Side(LS)-Schaltmittel aufteilen. Während die HS-Schaltmittel je an einer der beiden Versorgungsspannungen angeschlossen sind, sind die LS-Schaltmittel jeweils mit der Masse/GND verbunden. Diese aus vier MOSFET's bestehende H-Brückenschaltung kann über die jeweiligen Gate-Anschlüsse mit einem pulsweitenmodulierten Signal aktiv geschaltet werden. Zur Ausführung einer Vorstellbewegung werden im Schaltbild ein Paar diagonal einander gegenüberliegende MOSFET's angesteuert, wohingegen zur Ausführung einer Rückstellbewegung das andere Paar diagonal einander gegenüberliegende MOSFET's angesteuert werden. Der Anschluss für den Gleichstrommotor liegt in allgemein bekannter Weise im Zentrum der H-Brückenschaltung.

Die Ansteuerung der H-Brückenschaltung erfolgt gemäß einer bevorzugten Ausführungsform der erfindungsgemäßen Lösung über einen H-Brückentreiber-Schaltkreis mit integrierter Überstrom- und Kurzschlusserkennung sowie Unterspannungs-, Überspannungs- und Kurzschlusserkennungsfunktionalität. Derartige H-Brückentreiber-Schaltkreise stehen beispielsweise als standardisiertes Bauelement (z.B. TLE7182EM) des Herstellers Infineon zur Verfügung. Die Anwendung im Rahmen der erfindungsgemäßen Lösung bietet den Vorteil, dass integrierte Schutzmechanismen die vorgenannten erweiterten Diagnosemöglichkeiten bieten.

Die vorstehend erläuterte erfindungsgemäße elektronische Einrichtung ist vorzugsweise innerhalb eines Aktuatorgehäuses eines Entkupplungsaktuators untergebracht, welcher als Baueinheit außerdem einen Gleichstrommotor zur Erzeugung der Vor- und Rückstellbewegung umfasst, dessen Antriebsmoment über eine Stirnradstufe an ein Kugelgewindetrieb zum Betätigen einer Hakenscheibe einer Scharfenbergkupplung weitergeleitet wird.

Anstelle eines Gleichstrommotors kann jedoch auch beispielsweise ein dreiphasiger Drehstrommotor verwendet werden, was jedoch zwei zusätzliche Dreiphasenwechselrichter erfordert, wovon jeder der drei Dreiphasenwechselrichter an eine eigene Versorgungsspannung angeschlossen ist und jeweils nur eine Drehrichtung zur Erzeugung der Vor- und Rückstellbewegung abdeckt.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung einer DAK mit integriertem Entkupplungsaktuator, und
- Fig. 2: ein elektrisches Schaltbild einer H-Brückenschaltung zur Erzeugung einer Vor- und Rückstellbewegung des Kupplungsaktuators.

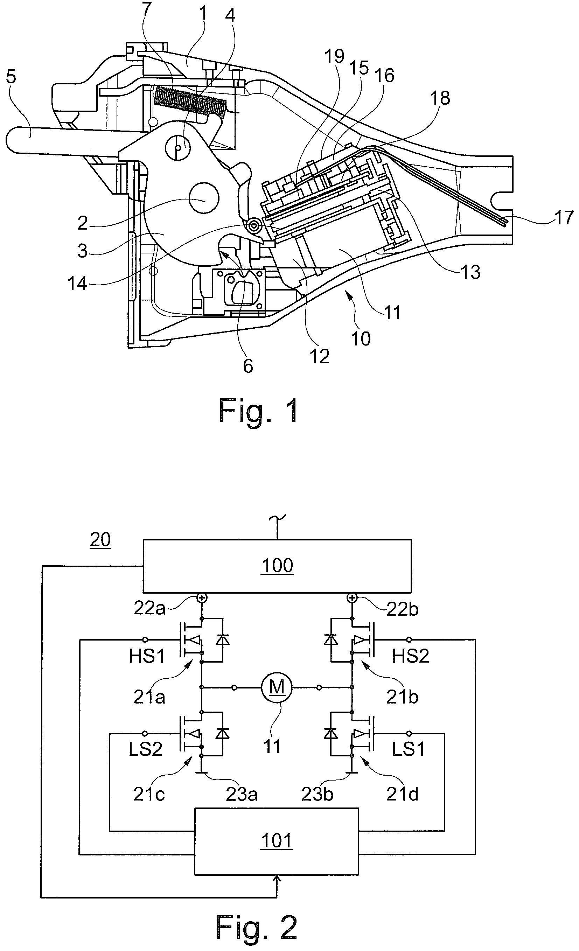

Gemäß Fig. 1 umfasst eine als automatische Mittelpufferkupplung für Güterzüge eingesetzte - an sich bekannte - Scharfenbergkupplung einen in einem Kupplungsgehäuse 1 eines Kupplungskopfes befestigten Hauptbolzen 2, auf dem eine Hakenscheibe 3 - das sogenannte Herzstück - schwenkbar angeordnet ist. Die Hakenscheibe 3 trägt einen Ösenbolzen 4, woran ein sogenannter Ösenzylinder 5 zur Betätigung einer Gegenkupplung angelenkt ist. In der Hakenscheibe 3 ist ein sogenanntes Hakenmaul 6 ausgebildet, wobei die Mittelachse eines Rundungsabschnitts des Hakenmauls um 180° versetzt auf dem gleichen Radius wie der Ösenbolzen 4 liegt, um die Kupplungsfunktion zu gewährleisten. Eine Zugfeder 7 zieht die Hakenscheibe 3 gegen eine am Kupplungsgehäuse 1 ausgebildete Anschlagfläche in eine kuppelbereite Stellung.

Zum Einkuppeln treffen Ösenzylinder 5 einander komplementär gegenüberliegender Kupplungen auf die jeweilige Hakenscheiben 3, die sich in die eingekuppelte Stellung entgegen der Kraft der Zugfeder 7 verdrehen, wodurch die Ösenzylinder 5 in das entsprechende Hakenmaul 6 der Hakenscheibe 3 gleiten. Dieser Kupplungsvorgang erfolgt mit einer schnellen schnappenden Bewegung.

Zum Entkuppeln kommt ein Entkupplungsaktuator 10 zum Einsatz, welcher in diesem Ausführungsbeispiel einen elektrischen Gleichstrommotor 11 als Antriebseinheit aufweist. Der Gleichstrommotor 11 ist mit einer hieran angeflanschten Motorbremse 12 versehen, welche die elektrische Antriebseinheit beim Halten einer eingenommenen Stellung, beispielsweise einer Pufferstellung, unterstützt. Das vom elektrischen Gleichstrommotor 11 erzeugte Antriebsmoment wird von einer Stirnradstufe 13 an einen Kugelgewindetrieb 14 weitergeleitet, welcher die rotatorische Antriebsbewegung in eine lineare Stellbewegung zur Betätigung der Hakenscheibe 3 umwandelt.

Benachbart zum Kugelgewindetrieb 14 befindet sich eine innerhalb eines die vorstehend genannten Bauteile umfassenden Aktuatorgehäuses 15 untergebrachte elektronische Einrichtung in Form einer bauelementbestückten Leiterplatte 16, worauf sich unter anderem auch die erfindungsgemäß ausgebildete H-Brückenschaltung befindet. Ferner sind diverse Endlagenschalter 18, 19 als Positionssensorik im Bereich des Kugelgewindetriebs 14 beziehungsweise der Hakenscheibe 3 angeordnet.

Der Entkupplungsaktuator 10 ist ferner an von außen her zugeführte elektrische Versorgungsleitungen 17 zur Zuführung von Versorgungsspannungen angeschlossen.

Gemäß Fig. 2 umfasst die elektronische Einrichtung zur Ansteuerung des vorstehend beschriebenen Entkupplungsaktuators 10 eine H-Brückenschaltung 20, welche zur Erzeugung einer Vor- und Rückstellbewegung mit insgesamt vier MOSFET's 21a bis 21d als elektronische Schaltmittel bestückt ist. Im Zentrum der H-Brückenschaltung 20 befindet sich der Anschluss für den einphasigen Gleichstrommotor 11.

Zur Gewährleistung einer unbeabsichtigten Entkupplung ist die H-Brückenschaltung 20 an zwei getrennte Versorgungsspannungen 22a und 22b von je 48 V angeschlossen.

Spiegelbildlich sind zwei zugeordnete Masseanschlüsse 23a und 23b vorhanden. Im Rahmen der H-Brückenschaltung 20 dient die erste permanent anliegende Versorgungsspannung 22a zur Ausführung einer Rückstellbewegung des - hier nicht weiter dargestellten - Entkupplungsaktuators. Eine übergeordnete Steuereinheit 100 schaltet dagegen die zweite Versorgungsspannung 22b zur Ausführung einer Vorstellbewegung zwecks Entkupplung nur dann auf, wenn eine valide Entkupplungsanforderung für den Entkupplungsaktuator 10 vorliegt.

Seitens der Gate-Anschlüsse der MOSFET's 21a bis 21d wird die Vorstellbewegung durch die gleichzeitige Ansteuerung der beiden MOSFET's 21a und 21d als HS1 und LS1 durch einen H-Brückentreiber-Schaltkreis 101 vorgenommen. Dieser wird wiederum über die Steuereinheit 100 einer zentralen Wagensteuerung angesteuert. Die Vorstellbewegung kann erfindungsgemäß jedoch nur dann ausgeführt werden, wenn die zweite Versorgungsspannung 22b durch die Steuereinheit 100 aufgeschaltet ist. Für die Rückstellbewegung ist die H-Brückenschaltung 20 permanent an der ersten Versorgungsspannung 22a angeschlossen. Werden die beiden MOSFET's 21b und 21c über den H-Brückentreiber-Schaltkreis 101 angesteuert, so fährt der Entkupplungsaktuator wieder in seine Ausgangsposition.

Die Erfindung ist nicht beschränkt auf das vorstehend beschriebene bevorzugte Ausführungsbeispiel. Es sind vielmehr auch Abwandlungen hiervon denkbar, welche ebenfalls vom Schutzbereich der Ansprüche Gebrauch machen. So ist es beispielsweise nicht zwingend, einen H-Brückentreiber-Schaltkreis mit entsprechenden Zusatzfunktionalitäten zu verwenden; stattdessen reicht ein Mikrocontroller oder eine separate PWM-Baueinheit aus, welche an die Gate-Anschlüsse der jeweiligen MOSFET's angeschlossen ist.

Ebenso kann statt eines einphasigen Gleichstrommotors auch ein insbesondere dreiphasiger Drehstrommotor verwendet werden, wobei allerdings eine Trennung der Spannungen in Verbindung mit einer H-Brückenschaltung erforderlich ist, weil alle drei Halbbrücken bei dem Betrieb eines Drehstrommotors auch nur in eine Richtung zum Einsatz kommen. Konkret wird ein Drehfeld durch das kontinuierliche Schalten der MOSFET's in einer Reihenfolge erzeugt, so dass sich der Rotor des Drehstrommotors in dieser Richtung dreht. Ein wiederholtes Durchschalten von Paaren der MOSFET's bringt den Drehstrommotor in eine Drehrichtung, wohingegen ein wiederholtes Durchschalten anderer Paare von MOSFET's den Drehstrommotor in die andere Drehrichtung bringt. Eine Separierung der Drehrichtungen für die Vor- und Rückstellbewegung ist durch nur zwei Versorgungsspannungen mittels nur einem Dreiphasenwechselrichter technisch nicht möglich. Es kommen daher in diesem Falle zwei Dreiphasenwechselrichter in Kombination mit einer erfindungsgemäßen H-Brückenschaltung zur Anwendung, wobei jeder der beiden Dreiphasenwechselrichter an eine der Versorgungsspannungen angeschlossen ist und jeweils nur eine Drehrichtung abdeckt. Im Vergleich zum Einsatz eines einphasigen Gleichstrommotors gestaltet sich diese Alternative demnach als technisch aufwendiger.

### Bezugszeichenliste

- 1: Kupplungsgehäuse
- 2: Hauptbolzen
- 3: Hakenscheibe
- 4: Ösenbolzen
- 5: Ösenzylinder
- 6: Hakenmaul
- 7: Zugfeder

- 10: Entkupplungsaktuator
- 11: Gleichstrommotor
- 12: Motorbremse
- 13: Stirnradstufe
- 14: Kugelgewindetrieb
- 15: Aktuatorgehäuse
- 16: Leiterplatte
- 17: elektrische Versorgungsleitungen
- 18: erster Endlagenschalter
- 19: zweiter Endlagenschalter
- 20: H-Brückenschaltung
- 21a - 21d: MOSFET's
- 22a, 22b: Versorgungsspannungen
- 23a, 23b: Masseanschlüsse

- 100: zentrale Steuereinheit
- 101: H-Brückentreiber-Schaltkreis

## Patentansprüche

1. Elektronische Einrichtung zur Ansteuerung eines elektromotorisch angetriebenen Entkupplungsaktuators (10) einer automatischen Kupplung eines Schienenfahrzeuges mittels einer mit mehreren elektronischen Schaltmitteln bestückten H-Brückenschaltung (20) zur Erzeugung einer Vor- und Rückstellbewegung des Entkupplungsaktuators (10),
**dadurch gekennzeichnet, dass** die H-Brückenschaltung (20) zur Gewährleistung einer unbeabsichtigten Entkupplung an zwei getrennte Versorgungsspannungen (22a, 22b) mit je zugeordneten Masseanschlüssen (23a, 23b) angeschlossen ist, wobei die erste Versorgungsspannung (22a) zur Ausführung einer Rückstellbewegung des Entkupplungsaktuators (10) permanent anliegt, wohingegen eine übergeordnete Steuerungseinheit (100) die zweite Versorgungsspannung (22b) zur Ausführung einer Vorstellbewegung zwecks Entkupplung nur dann aufschaltet, wenn eine Entkupplungsanforderung für den Entkupplungsaktuators (10) vorliegt.

2. Elektronische Einrichtung nach Anspruch 1,
**dadurch gekennzeichnet, dass** die Steuerungseinheit (100) als eine zentrale Wagensteuerung ausgebildet ist.

3. Elektronische Einrichtung nach Anspruch 1,
**dadurch gekennzeichnet, dass** die H-Brückenschaltung (20) als eine lokale Aktuatorsteuerung ausgebildet ist.

4. Elektronische Einrichtung nach Anspruch 1,
**dadurch gekennzeichnet, dass** die elektronischen Schaltmittel als MOSFET's (21a - 21d) ausgeführt sind.

5. Elektronische Einrichtung nach Anspruch 4,
**dadurch gekennzeichnet, dass** die MOSFET's (21a - 21d) der H-Brückenschaltung (20) über ein pulsweitenmoduliertes Signal (PWM) angesteuert sind.

6. Elektronische Einrichtung nach Anspruch 4,
**dadurch gekennzeichnet, dass** die die MOSFET's (21a - 21d) der H-Brückenschaltung (20) über einen H-Brückentreiber-Schaltkreis (101) mit integrierter Überstrom- und Kurzschlusserkennung sowie Unterspannungs-, Überspannungs- und Kurzschlusserkennung angesteuert sind.

7. Entkupplungsaktuator (10) für eine automatische Kupplung (DAK) eines Schienenfahrzeuges, der mit einer elektronischen Einrichtung nach einem der vorstehenden Ansprüche ausgestattet ist.

8. Entkupplungsaktuator (10) nach Anspruch 7,
**dadurch gekennzeichnet, dass** die elektronische Einrichtung mit der H-Brückenschaltung (20) in Form einer bauelementbestückten Leiterplatte (16) innerhalb eines Aktuatorgehäuses (15) untergebracht ist.

9. Entkupplungsaktuator (10) nach Anspruch 8,
**dadurch gekennzeichnet, dass** außerdem ein Gleichstrommotor (11) zur Erzeugung der Vor- und Rückstellbewegung automatischen Kupplung (DAK) vorgesehen ist, dessen Antriebsmoment über eine Stirnradstufe (13) an einen Kugelgewindetrieb (14) zum Betätigen einer Hakenscheibe (3) einer Scharfenbergkupplung weitergeleitet wird.

10. Automatische Mittelpufferkupplung, insbesondere für Güterzüge, welche nach Art einer Scharfenbergkupplung ausgebildet ist, die einen Entkupplungsaktuator (10) nach Anspruch 9 umfasst.

## Claims

1. Electronic apparatus for controlling a decoupling actuator (10) driven by an electric motor, of an automatic coupling on a rail vehicle by means of an H-bridge circuit (20) equipped with a plurality of electronic switching means for generating a forward and return movement of the decoupling actuator (10), **characterized in that** the H-bridge circuit (20) is connected to two separate supply voltages (22a, 22b), each with associated ground connections, (23a, 23b), to ensure unintentional decoupling, wherein the first supply voltage (22a) is permanently applied to execute a return movement of the decoupling actuator (10), whereas a higher-level control unit (100) switches on the second supply voltage (22b) to execute a forward movement for decoupling only when a decoupling request is present for the decoupling actuator (10).

2. Electronic apparatus according to claim 1,
**characterized in that** the control unit (100) is configured as a central vehicle control unit.

3. Electronic apparatus according to claim 1,
**characterized in that the** H-bridge circuit (20) is configured as a local actuator control.

4. Electronic apparatus according to claim 1,
**characterized in that** the electronic switching means are implemented as MOSFETs (21a-21d).

5. Electronic apparatus according to claim 4,
**characterized in that** the MOSFETs (21a-21d) of the H-bridge circuit (20) are driven by a pulse-width-modulated (PWM) signal.

6. Electronic apparatus according to claim 4,
**characterized in that** the MOSFETs (21a-21d) of the H-bridge circuit (20) are driven via an H-bridge driver circuit (101) with integrated overcurrent and short-circuit detection as well as undervoltage, overvoltage, and short-circuit detection.

7. A decoupling actuator (10) for an automatic coupling (DAK) of a rail vehicle, equipped with an electronic apparatus according to any one of the preceding claims.

8. The decoupling actuator (10) according to claim 7,
**characterized in that** electronic apparatus with the H-bridge circuit (20) is housed within an actuator housing (15) in the form of a printed circuit board (16) provided with electronic components.

9. The decoupling actuator (10) according to claim 8,
**characterized in that** a direct-current motor (11) is also provided to generate the forward and return movement of the automatic coupling (DAK), the drive torque of which is transmitted via a spur gear stage (13) to a ball screw drive (14) for actuating a hook disc (3) of a Scharfenberg coupling.

10. An automatic center-buffer coupling, in particular for freight trains, which is designed in the manner of a Scharfenberg coupling and comprises a decoupling actuator (10) according to claim 9.

## Revendications

1. Appareil électronique destiné à la commande d'un actionneur de découplage (10) entraîné de manière électromotorisée d'un attelage automatique d'un véhicule ferroviaire au moyen d'un montage en pont en H (20) équipé de plusieurs moyens de commutation électroniques pour la génération d'un mouvement d'avance et de recul de l'actionneur de découplage (10), **caractérisé en ce que** le montage en pont en H (20) est raccordé à deux tensions d'alimentation séparées (22a, 22b) avec chacune des raccords de masse associés (23a, 23b) afin de garantir un découplage involontaire, dans lequel la première tension d'alimentation (22a) est appliquée en permanence pour la réalisation d'un mouvement de recul de l'actionneur de découplage (10), alors qu'une unité de commande (100) supérieure met en service la seconde tension d'alimentation (22b) pour la réalisation d'un mouvement d'avance en vue du découplage seulement si une exigence de découplage pour l'actionneur de découplage (10) se présente.

2. Appareil électronique selon la revendication 1,
**caractérisé en ce que** l'unité de commande (100) est conçue comme une commande de voiture centrale.

3. Appareil électronique selon la revendication 1,
**caractérisé en ce que** le montage en pont en H (20) est conçu comme une commande d'actionneur locale.

4. Appareil électronique selon la revendication 1,
**caractérisé en ce que** les moyens de commutation électroniques sont formés comme des MOSFET (21a-21d).

5. Appareil électronique selon la revendication 4,
**caractérisé en ce que** les MOSFET (21a - 21d) du montage en pont en H (20) sont commandés par le biais d'un signal modulé en largeur d'impulsion (PWM).

6. Appareil électronique selon la revendication 4,
**caractérisé en ce que** les MOSFET (21a - 21d) du montage en pont en H (20) sont commandés par le biais d'un circuit de commutation de pilote de pont en H (101) avec une détection de surintensité et de court-circuit intégrée ainsi qu'une détection de sous-tension, de surtension et de court-circuit.

7. Actionneur de découplage (10) pour un attelage automatique (DAK) d'un véhicule ferroviaire qui est équipé d'un appareil électronique selon l'une quelconque des revendications précédentes.

8. Actionneur de découplage (10) selon la revendication 7,
**caractérisé en ce que** l'appareil électronique avec le montage en pont en H (20) sous la forme d'une carte de circuit imprimé (16) équipée de composants est logé à l'intérieur d'un boîtier d'actionneur (15).

9. Actionneur de découplage (10) selon la revendication 8,
**caractérisé en ce qu'**un moteur à courant continu (11) est en outre prévu pour la génération du mouvement d'avance et de recul de l'attelage automatique (DAK), dont le couple d'entraînement est transmis par le biais d'un étage d'engrenage cylindrique (13) à une vis à billes (14) pour l'actionnement d'une rondelle à crochet (3) d'un attelage Scharfenberg.

10. Attelage à tampon central automatique, en particulier pour des trains de marchandises, qui est conçu comme un attelage Scharfenberg qui comprend un actionneur de découplage (10) selon la revendication 9.
